# EUROPÄISCHE PATENTSCHRIFT

(11) **EP 1 088 251 B1**
(45) Veröffentlichungstag und Bekanntmachung des Hinweises auf die Patenterteilung: **27.03.2002**
(21) Anmeldenummer: 99939907.4
(22) Anmeldetag: 17.06.1999
(51) Int. Cl.: G02B 13/00, G02B 15/02, G02B 26/08

(54) **OPTISCHES VORSATZSYSTEM FÜR EINE KAMERA**
OPTICAL ADAPTER SYSTEM FOR A CAMERA
SYSTEME D'ADAPTATEUR OPTIQUE POUR UN APPAREIL DE PRISE DE VUES

(30) Priorität: 17.06.1998 DE 19827018
(43) Veröffentlichungstag der Anmeldung: 04.04.2001
(73) Patentinhaber: P + S Technik GmbH, 81671 München (DE)
(72) Erfinder: WEIGEL, Wolfgang, D-85521 Ottobrunn (DE); ROESSEL, Wolfgang, New York, NY 11509 (US)
(74) Vertreter: Münich, Wilhelm, Dr.
(86) Internationale Anmeldenummer: DE9901785
(87) Internationale Veröffentlichungsnummer: WO9966362

(56) Entgegenhaltungen:
- EP-A- 0 690 327
- US-A- 4 867 549
- US-A- 5 469 236

## Beschreibung

### Technisches Gebiet

Die Erfindung bezieht sich auf ein optisches Vorsatzsystem für eine Kamera das zwischen Aufnahmeobjektiv und Kameragehäuse eingesetzt wird und ein Relaissystem aufweist.

Bei der Kamera kann es sich dabei um einen Fotoapparat, eine Filmkamera insbesondere für den professionellen Einsatz oder eine Videokamera handeln.

### Stand der Technik

Ein optisches Vorsatzsystem ist aus der EP-A-0 690 327 bekannt. Weitere gattungsgemäße Vorsatzsysteme sind aus den US-PSen 5,469,236 oder 4,867,549 bekannt. Auf diese Druckschriften wird zur Erläuterung aller hier nicht im einzelnen beschriebenen Merkmale ausdrücklich Bezug genommen.

Allen bekannten optischen Vorsatzsystemen ist gemeinsam, daß das normale Aufnahmeobjektiv, das sich "ansonsten direkt am Kameragehäuse" befindet, an das Vorsatzsystem angesetzt wird, so daß es - je nach Ausbildung des Vorsatzsystemes - einen mehr oder weniger großen Abstand vom Kameragehäuse hat. Hierdurch wird insbesondere dann, wenn es sich bei dem Aufnahmeobjektiv um ein Zoomobjektiv handelt, die Bedienung für die Bedienungsperson erschwert, da sie für die Brennweiten-Einstellung das Objektiv und für die Bedienung der Kamera Elemente in einem vergleichsweise großen Abstand handhaben muß.

Weiterhin ist bei den bekannten Systemen nachteilig, daß sie nicht in einfacher Weise an unterschiedliche Aufgabenstellungen angepaßt werden können. So ist es beispielsweise nicht möglich, ein- und dasselbe System als "gerades" und nach einfacher Umrüstung als abgewinkeltes System einzusetzen.

### Darstellung der Erfindung

Der Erfindung liegt die Aufgabe zugrunde, ein optisches Vorsatzsystem für eine Kamera, das zwischen Aufnahmeobjektiv und Kameragehäuse eingesetzt wird und ein Relaissystem aufweist, derart weiter zu bilden, daß die Handhabung erleichtert wird, und daß es in einfacher Weise für unterschiedliche Aufgaben umgerüstet werden kann.

Eine erfindungsgemäße Lösung diese Aufgabe ist im Patentanspruch 1 angegeben. Weiterbildungen der Erfindung sind Gegenstand der Ansprüche 2 folgende.

Erfindungsaemäß ist das Relaissystem derart aufgebaut, daß es mehr als eine Abbildung hinter einander ausführt, und daß das direkt am Kameragehäuse angeordnete Objektiv ein Zoomobjektiv ist.

Damit kann nicht nur die Fokussierung und eine eventuelle Bilddrehung "kameranah" vorgenommenen werden, sondern auch die Wahl des Bildausschnitts. Insbesondere kann das Zoomobjektiv ein Varioobjektiv sein, also ein Objektiv, bei dem sich bei einer Brennweitenänderung die Fokussierung nicht ändert.

Durch diese Ausbildung kann weiterhin das optische Vorsatzsystem vergleichsweise einfach umgerüstet werden. Insbesondere ist es möglich, die Gegenstandsweite zwischen der Abbildung des Aufnahmeobjektivs und dem ersten Bild so groß zu wählen, daß in diesen Bereich weitere Systeme, wie beispielsweise Umlenkeinheiten eingebracht werden können.

Dabei ist es besonders bevorzugt, wenn die Umlenkeinheit zwischen Aufnahmeobjektiv und Relaissystem angeordnet ist, da dann das im Aufnahmeweg vor der Umlenkeinheit angeordnete optische System vergleichsweise klein und damit leicht ist.

Bei einer weiteren Ausgestaltung weist die Umlenkeinheit zwei Elemente auf, von denen wenigstens eines den Lichtweg um 90° umlenkt. Insbesondere ist mit dieser Ausgestaltung ein "Versatz" der optischen Achse möglich, durch die auch komplizierter Aufnahmesituationen, wie sie beispielsweise bei Makroaufnahmen vorliegen, mit dem erfindungsgemäßen Vorsatzsystem gelöst werden können. Auch kann eine Schärfentiefenvergrößerung erreicht werden.

Insbesondere kann das eine Element ein Oberflächenspiegel und das andere Element ein Umlenkelement mit Bildumkehrung sein, so daß man bei einer Zwischenabbildung ein seitenrichtiges Bild erhält.

Die vorstehend genannte Ausbildung erlaubt nicht nur einen Versatz der optischen Achse, sondern auch ein Schwenken der versetzten optischen Achse. Hierzu ist ein Element zusammen mit dem Aufnahmeobjektiv derart schwenkbar, daß der jeweilige Schwenkwinkel des Aufnahmeobjektivs doppelt so groß wie der Schwenkwinkel des schwenkbaren Elements ist. Das schwenkbare Element kann dabei insbesondere der Oberflächenspiegel sein.

Bei einer bevorzugten Ausführung weist das Relaissystem drei Objektive und das Zoomobjektiv auf, wobei insbesondere zwischen dem ersten und dem zweiten Objektiv ein Prisma zur Bilddrehung angeordnet ist. Die beiden Objektive, die zwischen dem Prisma zur Bilddrehung und dem Zoomobjektiv angeordnet sind, sind bevorzugt gleichartig ausgebildet und symmetrisch zu der Mittelebene zwischen ihnen angeordnet.

### Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:
- Fig. 1: den prinzipiellen Aufbau eines ersten Ausführungsbeispiels,
- Fig. 2: ein zweites Ausführungsbeispiel, bei dem es sich Abwandlung des in Fig. 1 dargestellten Ausführungsbeispiels mit einem Versatz der optischen Achse des Aufnahmeobjektivs und des Relaissystems handelt,
- Fig.3: den Aufbau eines bei der Erfindung verwendeten Dachkantprismas,
- Fig. 4 und 5: Darstellungen zur Erläuterung der Erhöhung der Schärfentiefe bei einer Abwandlung des zweiten Ausführungsbeispiels, und
- Fig. 6: ein Ausführungsbeispiel des zum Bildlagenausgleich verwendeten Getriebes.

### Darstellung von Ausführungsbeispielen

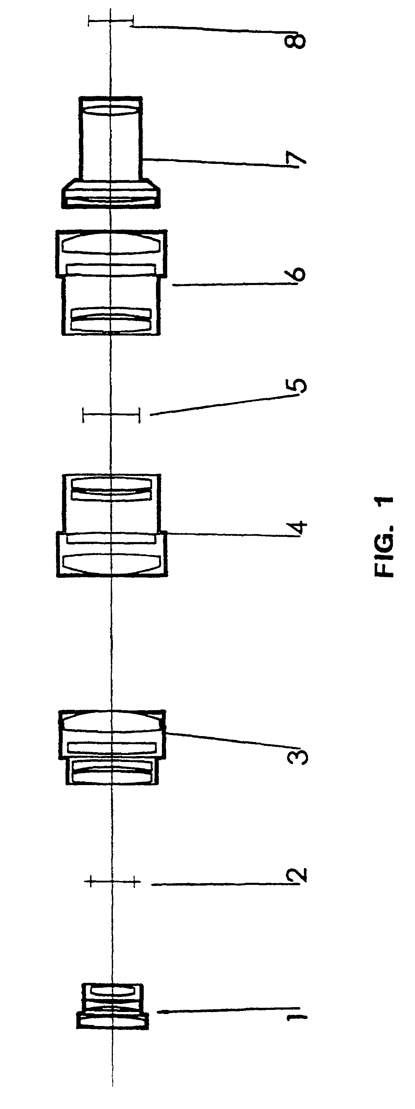

Fig. 1 zeigt ein erstes Ausführungsbeispiel der Erfindung, bei dem das Relaissystem derart aufgebaut ist, daß es mehr als eine Zwischenabbildung ausführt.

Hierzu sind zwischen einer Aufnahmeoptik 1 und einer Bildebene 8, in der ein Film oder ein Videoaufnehmer vorgesehen sein können, Relaisoptiken 3, 4 und 6 sowie eine Zoomoptik 7 angeordnet. Die Aufnahmeoptik 1 erzeugt ein Bild in einer ersten Zwischenbildebene 2. Dieses Bild wird von dem ersten Relaissystem, das aus den Relaisoptiken 3 und 4, die ein Tandemsystem bilden, besteht, in die zweite Zwischenbildebene 5 abgebildet.

Das in der Bildebene 5 erzeugte Bild wird von dem zweiten Relaissystem, das aus der Relaisoptik 6 mit fester Brennweite und dem Zoomobjektiv 7 besteht, in die Film-bzw. Videoaufnehmer-Ebene 8 abgebildet. Das Zoomobjektiv erlaubt dabei eine Einstellung des Bildausschnittes, ohne daß die Bedienungsperson ein aufgrund des Relaissystems weit entferntes Aufnahmeobjektiv bedienen müßte.

Insbesondere kann das Zoomobjektiv 7 so ausgebildet sein, daß das Bild in der Bildebene 8 je nach Einstellung der Brennweite des Zoomobjektives 7 vergrößert oder verkleinert wird.

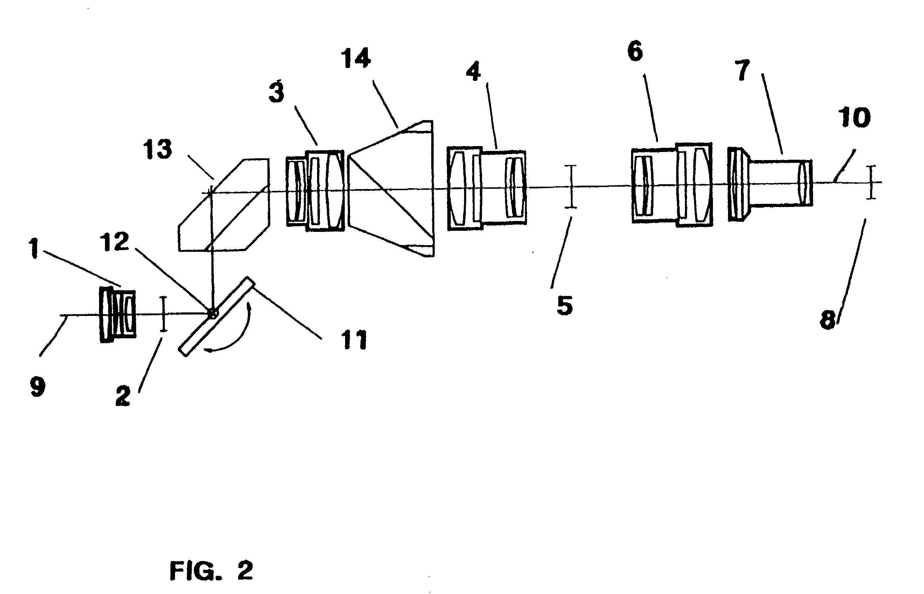

Fig. 2 zeigt ein zweites Ausführungsbeispiel, bei dem gleiche Elemente wie in Fig. 1 mit denselben Bezugszeichen versehen sind, so daß auf eine erneute Vorstellung verzichtet wird.

Bei diesem Ausführungsbeispiel sind zwischen der ersten Zwischenbildebene 2 und dem ersten Relaissystem, das aus den Relaisoptiken 3 und 4 besteht, Elemente vorgesehen, eine optische Achse 9 der Aufnahmeoptik 1 gegenüber einer optischen Achse 10 versetzen, die die Optiken 3, 4, 6 und 7 gemeinsam haben.

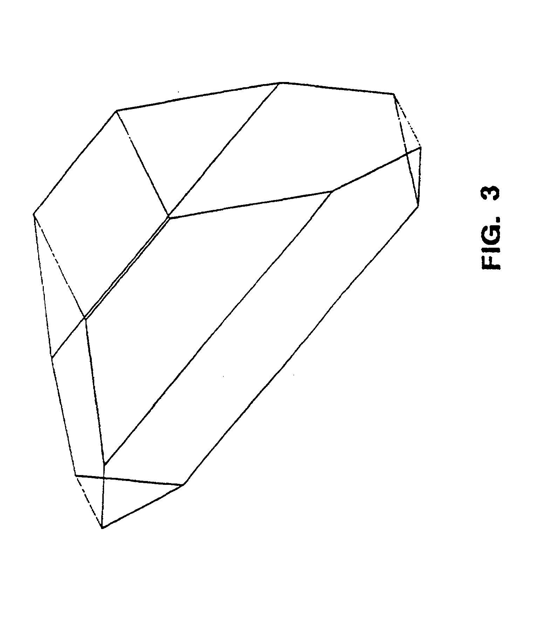

Die Elemente, die den Strahlengang umlenken, sind ein Oberflächenspiegel 11 und ein Dachkantprisma 13 mit Bildumkehrung. Ein Ausführungsbeispiel für das Dachkantprisma 13 ist in Fig. 3 dargestellt, auf die zur Erläuterung aller Einzelheiten ausdrücklich verwiesen wird.

Bei dem in Fig. 2 dargestellten Ausführungsbeispiel ist es möglich, das Objektiv 1 um eine zur Zeichenebene senkrechte Achse 12 zu schwenken. Hierzu ist der Oberflächenspiegel 11 um die Achse 12 drehbar. Die Aufnahmeoptik 1 ist dabei gemeinsam mit dem Oberflächenspiegel 11 derart schwenkbar, daß der jeweilige Schwenkwinkel der Aufnahmeoptik 1 doppelt so groß ist wie der Drehwinkel des Oberflächenspiegels 11 um die Achse 12.

Weiterhin ist es - in an sich bekannter Weise - möglich, das Objektiv 1 um den Abschnitt der optischen Achse zwischen den Elementen 11 und 13 zu schwenken. Ferner kann auch - ebenfalls in bekannter Weise - eine Drehung um die optische Achse 10 erfolgen.

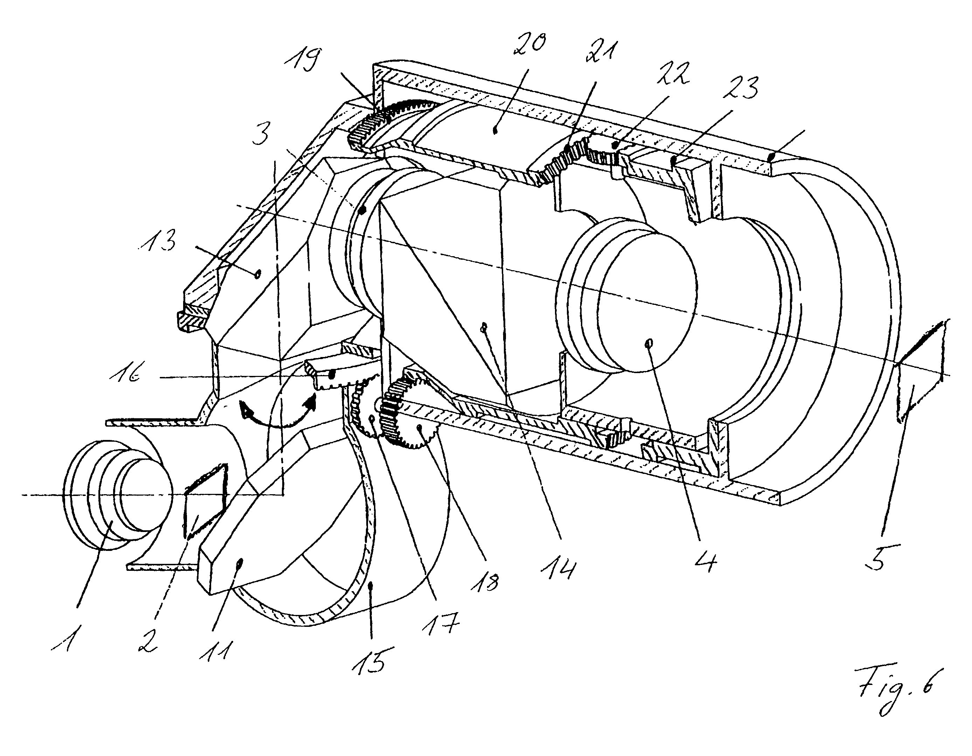

Wenn das Objektiv 1 um den Abschnitt der optischen Achse zwischen den Elementen 11 und 13 geschwenkt wird, würde ohne Ausgleich das Bild auf der Bildebene 8 rotieren. Deshalb ist zwischen den Relaisoptiken 3 und 4 ein Prisma 14 zur Bilddrehung angeordnet. Die Funktionsweise dieses Prisma wird nachfolgend unter Bezugnahme auf Fig. 6 noch näher erläutert.

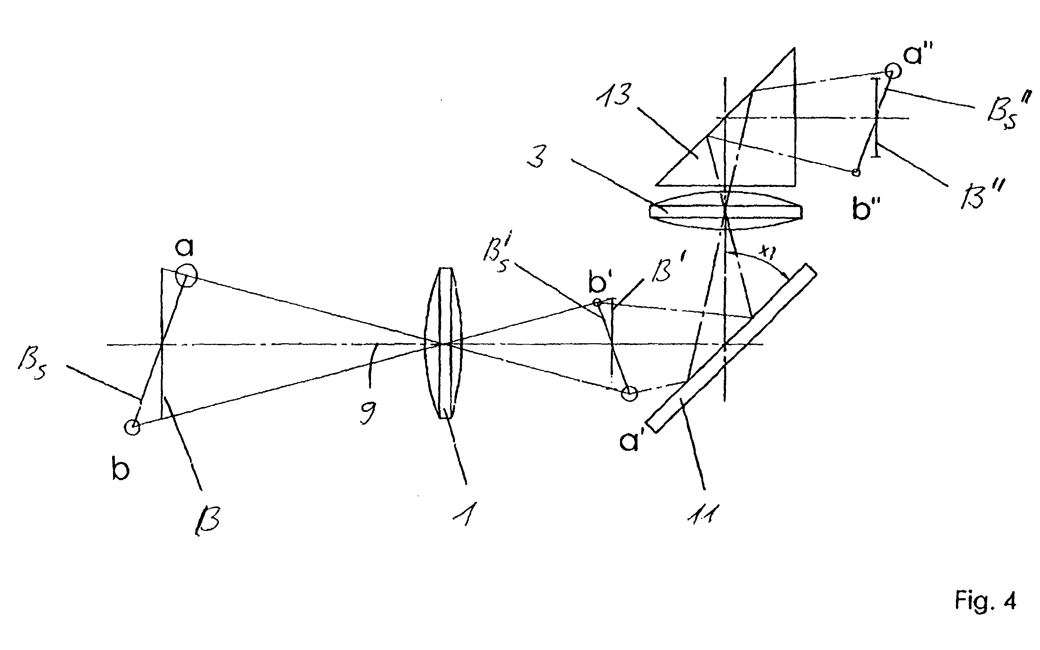

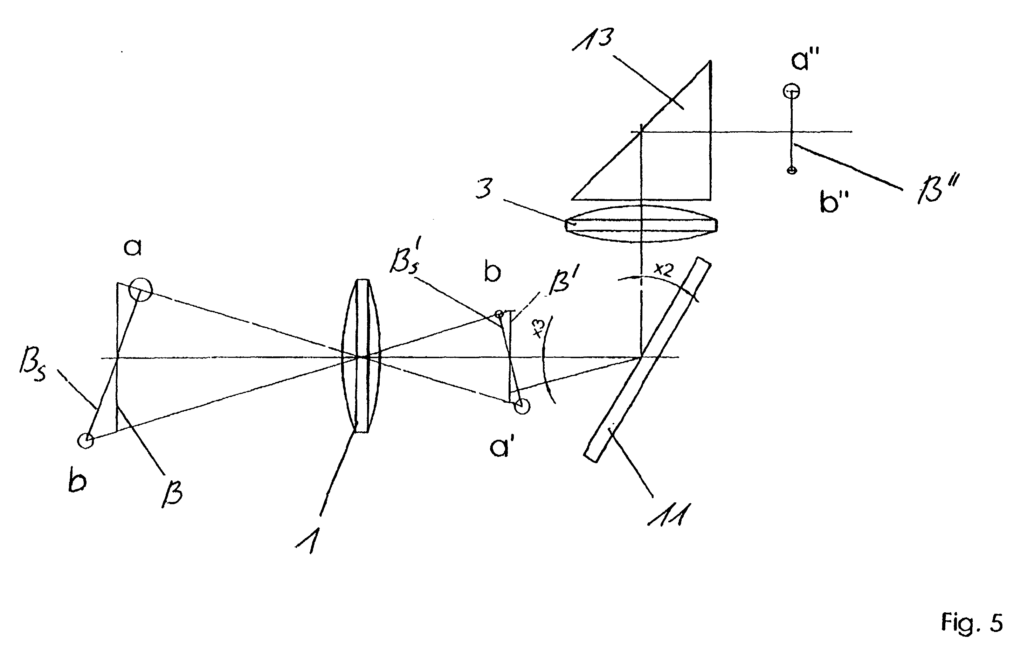

Der Oberflächenspiegel 11 kann nicht nur für die Realisierung einer Schwenkbewegung des Aufnahmeobjektives 1 verwendet werden, sondern auch dazu, eine Objektebene, die einen Winkel ungleich 90° mit der optischen Achse einschließt, auf die Bildebene 8 scharf abzubilden. Dies wird im folgenden unter Bezugnahme auf die Figuren 4 und 5 erläutert.

Fig. 4 zeigt schematisch einen Ausschnitt aus einer Abwandlung des zweiten Ausführungsbeispiels. Dabei sind gleiche Elemente wie in Fig. 2 mit den selben Bezugszeichen versehen, so daß auf eine erneute Vorstellung verzichtet wird. Das Aufnahmeobjektiv 1 bildet in der Normalstellung des Oberflächenspiegel 11 eine zur optischen Achse 9 senkrechte Objektebene B in die Bildebene B' scharf ab. Das Zwischenbild B' wird von dem Relaisobjektiv 3 in die zweite Zwischenbildebene B" abgebildet. Dabei wird der Strahlengang von den Elementen 11 und 13 - wie i. V. m. Fig. 2 erläutert - umgelenkt.

Wenn sich das aufzunehmende Objekt a-b nicht in der senkrechten Ebene B, sondern in der zur optischen Achse 9 "schiefen" Ebene Bₛ befindet, wird dieses in der Normalstellung des Oberflächenspiegels 11 in ebenfalls "schiefe" Ebenen Bₛ' bzw. Bₛ" abgebildet, so daß es nicht scharf in der Bildebene 8 abgebildet werden kann.

Erfindungsgemäß ist nun der Oberflächenspiegel 11 (auch) unabhängig von dem Aufnahmeobjektiv 1 drehbar. Ändert man die Winkelstellung des Spiegels 11 von dem Wert x1 in Fig. 4 auf den Wert x2 (Fig. 5), so wird aufgrund des Kippwinkels x3 die Ebene Bₛ' auf die zur optischen Achse senkrechte Ebene B" abgebildet. Damit ist es möglich, eine zu optischen Achse schiefe Ebene scharf auf die Bildebene abzubilden.

Fig. 6 zeigt - wie bereits erwähnt - ein Ausführungsbeispiel für den erfindungsgemäß vorgesehenen Bildlagenausgleich. Dabei sind gleiche Elemente wie in den vorigen Figuren wiederum mit den selben Bezugszeichen bezeichnet, so daß auf eine erneute Beschreibung verzichtet wird. Ein mit einem Schwenkkopf 15 verbundener Kegelzahnkranz 16 treibt beim Schwenken das Kegelrad 17 an. Dieses ist fest mit einem Zahnrad 18 verbunden, das über die Verzahnung 19 den Tubus 20 antreibt. Über das Differentialgetriebe, Verzahnung 21, Kegelrad 22 und Kegelzahnkranz 23 wird das Prisma 14, das bei dem gezeigten Ausführungsbeispiel ein Pechanprisma ist, mit der halben Winkelgeschwindigkeit zur Drehgeschwindigkeit des Schwenkkopfes 15 gedreht. Damit wird das Bild auf der Ebene 5 nicht gedreht.

Anstelle des gezeigten Getriebes kann jedes andere Getriebe verwendet werden, sofern dieses ein Übersetzungsverhältnis entsprechend dem jeweils eingesetzten Prisma hat. Das gezeigte Getriebe ist jedoch besonders platzsparend.

## Patentansprüche

1. Optisches Vorsatzsystem für eine Kamera, adaptiert zum Einsetzen zwischen ein Aufnahmeobjektiv (1) und ein Kameragehäuse welches ein Relaissystem, bestehend aus drei Objektiven (3, 4, 6) und einem Zoomobjektiv (7), zur Abbildung des Bildes des Aufnahmeobjektivs auf den Film (8) oder den Bildaufnehmer aufweist,
wobei das Relaissystem derart aufgebaut ist, daß seine Optiken (3, 4, 6 und 7) mehr als eine Abbildung hintereinander ausführen, wobei das Objekt in eine zweite Zwischenbildebene (5 oder B") abgebildet wird,
und wobei das Vorsatzsystem so ausgelegt ist, daß das direkt am Kameragehäuse angeordnete Objektiv das Zoomobjektiv (7) ist, wenn das Vorsatzsystem zwischen dem Aufnahmeobjektiv (1) und dem Kameragehäuse eingesetzt ist.

2. Vorsatzsystem nach Anspruch 1,
wobei zwischen Aufnahmeobjektiv (1) und Relaissystem (3, 4, 6 und 7) eine Umlenkeinheit (11, 13) angeordnet ist.

3. Vorsatzsystem nach Anspruch 2,
wobei die Umlenkeinheit (11, 13) zwei Elemente aufweist, von denen wenigstens eines den Lichtweg um 90° umlenkt.

4. Vorsatzsystem nach Anspruch 3,
wobei das eine Element ein Oberflächenspiegel (11) und das andere Element ein Umlenkelement (13) mit Bildumkehrung ist.

5. Vorsatzsystem nach Anspruch 4,
wobei der Oberflächenspiegel (11) um eine Achse (12) normal auf die optische Achse (10) des Systems drehbar angeordnet ist und derart gegenüber dem Aufnahmeobjektiv (1) drehbar ist,
daß eine schräge Objektebene (B_{S}) auf die Bildebene (8) scharf abgebildet wird.

6. Vorsatzsystem nach Anspruch 5,
wobei das Umlenkelement mit Bildumkehrung ein Dachkantsystem (13) ist.

7. Vorsatzsystem nach einem der Ansprüche 3 bis 6,
wobei ein Element (11) zusammen mit dem Aufnahmeobjektiv (1) derart drehbar ist, daß der jeweilige Schwenkwinkel des Aufnahmeobjektivs doppelt so groß wie der Schwenkwinkel des schwenkbaren Elements ist.

8. Vorsatzsystem nach Anspruch 7,
wobei das schwenkbare Element der Oberflächenspiegel (11) ist.

9. Vorsatzsystem nach Anspruch 8,
wobei zwischen dem ersten (3) und dem zweiten Objektiv (4) ein Prisma (14) zur Bilddrehung angeordnet ist.

10. Vorsatzsystem nach Anspruch 9,
wobei das Prisma (14) ein Pechanoder ein Dove-Prisma ist.

11. Vorsatzsystem nach Anspruch 10,
wobei ein Getriebe vorgesehen ist, das das Prisma (14) derart antreibt, daß die Bildlage sich nicht ändert.

12. Vorsatzsystem nach einem der Ansprüche 1 bis 11,
wobei die beiden Objektive 4,6), die zwischen dem Prisma (14) zur Bilddrehung und dem Zoomobjektiv (7) angeordnet sind, gleichartig ausgebildet sind, und
daß die beiden Objektive symmetrisch zu der Mittelebene zwischen ihnen angeordnet sind.

13. Vorsatzsystem nach einem der Ansprüche 1 bis 12,
wobei das Zoomobjektiv (7) ein Varioobjektiv ist.

## Claims

1. Optical adapter system for a camera, adapted for insertion between a shooting lens (1) and a camera housing, which comprises a relay system composed of three lenses (3, 4, 6) and a zoom lens (7) for projecting the image of said shooting lens on the film (8) or the image receiver, wherein said relay system is configured in such a way that its optical elements (3, 4, 6 and 7) constitute more than a single image in succession, with the object being projected into a second intermediate image plane (5 or B"),
And wherein said adapter system is so designed that the lens disposed directly on the camera housing is the zoom lens (7) when the adapter system is interposed between said shooting lens (1) and said camera housing.

2. Adapter system according to Claim 1,
wherein a deflecting unit (11, 13) is disposed between said shooting lens (1) and said relay system (3, 4, 6 and 7).

3. Adapter system according to Claim 2,
wherein said deflecting unit (11, 13) comprises two elements whereof at least one deflects the optical path by 90°.

4. Adapter system according to Claim 3,
wherein said first element is a front surface mirror (11) whereas the other element is a deflecting element (13) with image reversion.

5. Adapter system according to Claim 4,
wherein said front surface mirror (11) is arranged for rotating about an axis (12) orthogonal on the optical axis (10) of the system while it is pivotable relative to said shooting lens (1) in such a way that an oblique object plane (B_{S}) is projected sharply on the image plane (8).

6. Adapter system according to Claim 5,
wherein said deflecting element with image reversion is a ridge system (13).

7. Adapter system according to any of the Claims 3 to 6,
wherein an element (11) together with said shooting lens (1) is adapted to be rotated in such a way that the respective pivoting angle of said shooting lens corresponds to the double value of the pivoting angle of said pivotable element.

8. Adapter system according to Claim 6,
wherein said pivotable element is said front surface mirror (11).

9. Adapter system according to Claim 8,
wherein a prism (14) is arranged between said first lens (3) and said second lens (4) for image rotation.

10. Adapter system according to Claim 9,
wherein said prism (14) is a prism of the Pechan or the Dove type.

11. Adapter system according to Claim 10,
wherein a gearing is disposed that controls said prism (14) in such a way that the image position will not be changed.

12. Adapter system according to any of the Claims 1 to 11,
wherein said two lenses (4, 6), which are mounted between said prism (14) for image rotation and said zoom lens (7), present the same configuration, and in that said two lenses are arranged symmetrically with respect to the centre plane therebetween.

13. Adapter system according to any of the Claims 1 to 12,
wherein said zoom lens (7) is a variable focus lens.

## Revendications

1. Système d'adaptateur optique pour un appareil de prise de vues, adapté à être interposé entre un objectif de prise (1) et un carter de la caméra, qui comprend un système à relais, composé par trois objectifs (3, 4, 6) et un objectif à focale variable (7), pour projeter l'image dudit objectif de prise sur le film (8) ou le récepteur d'image,
dans lequel ledit système à relais est configuré de façon, que ses éléments optiques (3, 4, 6 et 7) réalisent plus qu'une seule image en succession, l'objet étant projeté dans un deuxième plan d'image intermédiaire (5 ou B"),
et dans lequel le système d'adaptateur est conçu de façon, que l'objectif disposé directement au carter de la caméra soit l'objectif à focale variable, quand le système d'adaptateur est interposé entre ledit objectif de prise (1) et ledit carter de la caméra.

2. Système d'adaptateur selon la revendication 1,
dans lequel une unité de déviation (11, 13) est disposée entre ledit objectif de prise (1) et ledit système à relais (3, 4, 6 et 7).

3. Système d'adaptateur selon la revendication 2,
dans lequel ladite unité de déviation (11, 13) comprend deux éléments dont au moins un change la direction de la marche de la lumière par 90°.

4. Système d'adaptateur selon la revendication 3,
dans lequel ledit premier élément est un miroir de surface (11), pendant que l'autre élément est un élément déviateur (13) à renversement d'image.

5. Système d'adaptateur selon la revendication 4,
dans lequel ledit miroir de surface (11) est disposé pour une rotation autour d'un axe (12) orthogonal sur l'axe optique (10) du système, en étant pivotable relativement audit objectif de prise (1) d'une façon, qu'un plan d'objet oblique (B_{S}) soit nettement projeté sur le plan d'image (8).

6. Système d'adaptateur selon la revendication 5,
dans lequel ledit élément déviateur à renversement de l'image est un système triangulaire (13).

7. Système d'adaptateur selon une quelconque des revendications 3 à 6,
dans lequel un élément (11), ensemble avec ledit objectif de prise (1), est apte à être tourné de façon, que l'angle de pivotement respectif dudit objectif de prise corresponde au double de l'angle de pivotement dudit élément pivotable.

8. Système d'adaptateur selon la revendication 6,
dans lequel ledit élément pivotable est ledit miroir de surface (11).

9. Système d'adaptateur selon la revendication 8,
dans lequel un prisme (14) est disposé, pour la rotation de l'image, entre ledit premier objectif (3) et ledit deuxième objectif (4).

10. Système d'adaptateur selon la revendication 9,
dans lequel ledit prisme (14) est un prisme du type Pechan ou du type Dove.

11. Système d'adaptateur selon la revendication 10,
dans lequel un engrenage est disposé, qui commande ledit prisme (14) de façon, que la position de l'image ne soit pas changée.

12. Système d'adaptateur selon une quelconque des revendications 1 à 11,
dans lequel les deux objectifs (4, 6), qui sont montés entre ledit prisme (14) pour la rotation de l'image et ledit objectif (7) à focale variable, présentent la même configuration, et
en ce que lesdits deux objectifs sont disposés en symétrie relative au plan central y entre.

13. Système d'adaptateur selon une quelconque des revendications 1 à 12,
dans lequel ledit objectif à focale variable (7) est un objectif zoom.
